(19) Europäisches Patentamt
European Patent Office
Office européen des brevets

(11) **EP 1 215 665 A2**

(12) **EUROPEAN PATENT APPLICATION**

(43) Date of publication:
**19.06.2002 Bulletin 2002/25**

(51) Int Cl.[7]: **G11B 7/013**

(21) Application number: **01129712.4**

(22) Date of filing: **13.12.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **15.12.2000 JP 2000382380**

(71) Applicant: **Pioneer Corporation
Meguro-ku, Tokyo (JP)**

(72) Inventors:
• **Nomoto, Takayuki, c/o Pioneer Corporation
Tsurugashima-shi, Saitama 350-2288 (JP)**

• **Yanagisawa, Takuma, c/o Pioneer Corporation
Tsurugashima-shi, Saitama 350-2288 (JP)**
• **Wada, Yasumitsu, c/o Pioneer Corporation
Tsurugashima-shi, Saitama 350-2288 (JP)**
• **Ohsawa, Seiichi, c/o Pioneer Corporation
Tsurugashima-shi, Saitama 350-2288 (JP)**
• **Yokogawa, Fumihiko, c/o Pioneer Corporation
Tsurugashima-shi, Saitama 350-2288 (JP)**

(74) Representative: **Goddar, Heinz J., Dr.
FORRESTER & BOEHMERT
Pettenkoferstrasse 20-22
80336 München (DE)**

(54) **Optical disc having pits of desired wall angle**

(57) The invention relates to an optical disc of the next generation which is capable of recording data at a high density by using an optical system having a larger numerical aperture and a reproduce beam of light with a shorter wavelength than those used with a conventional DVD. The optical disc includes an information recording layer where information is recorded as an array of pits at a predetermined track pitch, and a light transmitting layer formed on the information recording layer and having a film thickness of 0. 13 mm or less. The information recorded therein is reproduced upon irradiation of a beam of light having a wavelength ranging from 400 nm to 415 nm onto the information recording layer through the light transmitting layer from an objective lens having a numerical aperture ranging from 0.75 to 0.86. In this disc, a taper angle of the pits is 55 degrees or higher.

## FIG. 10

## Description

BACKGROUND OF THE INVENTION

1. Field of the Invention

The present invention relates to an optical disc for recording information in the form of an array of pits.

2. Description of Related Art

Reproducing performance of an information reproducing apparatus of an optical disc is defined by NA/λ, where NA is a numerical aperture of an objective lens and λ is a wavelength of a beam of a read light. Hence, a recording and reproducing density of an optical disc can be improved by having a larger NA and a shorter λ. For example, an optical disc capable of recording information at a high density, known as a DVD (Digital Versatile Disc), adopts an optical disc system, wherein λ = 650 nm, NA = 0.6, and a thickness (hereinafter, referred to as the light transmitting layer thickness) from the main surface to the reflection recording surface (information recording layer) of the optical disc is 0.6 mm. The DVD is capable of recording data of up to 4.7 MB on one surface, which corresponds to, for example, NTSC video signals approximately two hours long.

There has been a commercial need for a high-density reproduce-only optical disc. In order to record digital HDTV videos of one movie (approximately two and a half hours = 150 minutes) available through BS (Broadcasting Satellite) digital TV broadcasting, a necessary capacity is estimated at 22.5 to 27 GB (gigabytes).

On the other hand, in an information reproducing apparatus of such a high-density reproduce-only optical disc, the so-called focus servo and tracking servo of the objective lens are essential in order to write information into or read information from the optical disc in a reliable manner.

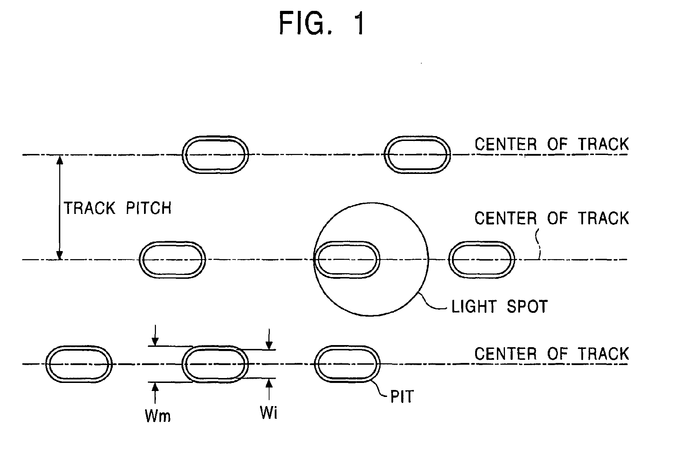

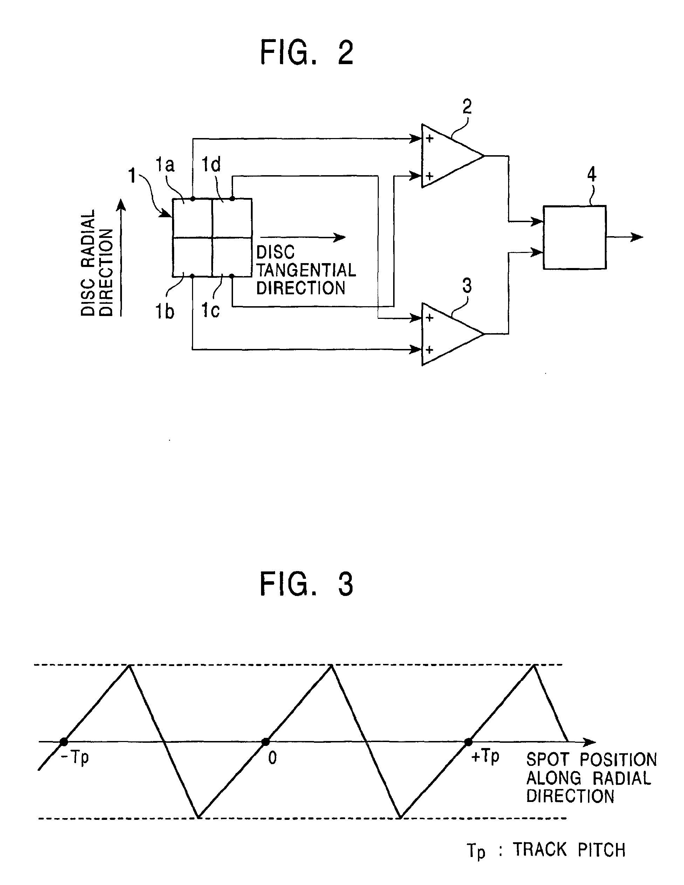

The following description will describe a focusing servo control method by way of, for example, a phase difference method by a reproducing apparatus of a DVD. As shown in Fig. 1, a beam of light from an optical pick-up device is irradiated and focused on a track of the DVD. The pick-up includes, for example, a quadrant photo-detector 1 as shown in Fig. 2. The quadrant photo-detector 1 is provided with an optoelectronic element having 4-split light reception surfaces 1a through 1d split in a track direction and a direction perpendicular to the track direction. A spot of light is formed on a recording layer of the rotating DVD. The optoelectronic element receives reflection light from the information read spot on the DVD by the respective four light reception surfaces 1a through 1d, whereby outputting light reception signals Ra through Rd as electric signals correspond to respective quantities of reception light by the light reception surfaces 1a through 1d, respectively. The light reception signals corresponding to the light reception surfaces 1a and 1c are supplied to an adder 2, and the light reception signals corresponding to the light reception surfaces 1b and 1d are supplied to an adder 3. Both the adders 2 and 3 are connected to a phase comparator 4, where a computation is performed to obtain an output signal and a tracking error detection signal through a low-pass filter. Although it is not shown in the drawing, an RF signal is composed of a sum of outputs from the light reception surfaces 1a, 1b, 1c and 1d. Herein, a phase difference tracking error detection signal is generated based on an asymmetric intensity distribution of a spot reflected onto the detector from the optical disc by a pit.

In an optical disc system of the next generation, there is a demand to apply the phase difference method using a quadrant photo-detector to an information reproducing apparatus of such a high-density reproduce-only optical disc.

However, when the phase difference method is applied to an information reproducing apparatus of a high-density reproduce-only optical disc, a reproduction wavelength has to be shorter and the NA of the objective lens has to be larger as has been discussed above in order to form a smaller beam spot of light for a record pit that must be made smaller to increase the capacity of the optical disc. Under these conditions, wave front aberration on the optical disc poses a problem.

To be more specific, the wave front aberration is a function of a quantity of defocus or an error in the light transmitting layer thickness, and is expressed by the following equations:

$$\text{Wave front aberration} =$$

$$(1-(1-(\text{NA of objective lens})^2)^{1/2})\cdot(\text{Quantity of}$$

$$\text{defocus})/(\text{Reproduction wavelength})$$

$$\text{Wave front aberration} =$$

$$\text{Const}\cdot(\text{NA of objective lens})^4\cdot(\text{Error in cover layer}$$

$$\text{thickness})/(\text{Reproduction wavelength})$$

As can be understood from the above equations, the shorter the reproduction wavelength and the larger the NA, the greater the wave front aberration becomes. For example, assume that a quantity of defocus is the same, then the optical disc system of the next generation has more than three-fold wave front aberration compared with the currently used DVD. The wave front aberration adversely affects various kinds of signals, and the most noticeable example would be a gain fluctuation of a tracking error detection signal obtained by the phase difference method (hereinafter, referred to as phase difference tracking error detection signal).

With the conventional reproduce-only optical disc system, such as a DVD, a quantity of wave front aberration caused by defocus and an error in the light transmitting layer thickness is sufficiently small even when the phase difference method is used, and so are the influences on the signals. Hence, a gain fluctuation of the phase difference tracking error detection signal should not be a concern. However, the gain fluctuation poses a significant problem in the next generation optical disc system.

As has been discussed, when the capacity of an optical disc is increased, a gain fluctuation of the phase difference tracking error detection signal caused by defocus or an error in the light transmitting layer thickness becomes an unavoidable problem, and it is impossible to increase the capacity unless this problem is solved.

OBJECT AND SUMMARY OF THE INVENTION

The present invention has been devised to solve the above problems, and therefore, has an object to provide a next generation optical disc capable of recording data at a higher density than those in a conventional DVD by using an optical system having a larger numerical aperture and emitting a reproduce beam of light with a shorter wavelength.

In order to achieve the above and other objects, the present invention provides an optical disc including an information recording layer where information is recorded as an array of pits at a predetermined track pitch, and a light transmitting layer formed on the information recording layer and having a film thickness of 0.13 mm or less, the information recorded therein being reproduced upon irradiation of a beam of light having a wavelength ranging from 400 nm to 415 nm onto the information recording layer through the light transmitting layer from an objective lens having a numerical aperture ranging from 0.75 to 0.86, wherein a taper angle of the pits is 55 degrees or higher, the taper angle being an angle formed by a tapered surface of the pit and a bottom surface of the pit.

In the optical disc of the present invention, the taper angle of the pits is 80 degrees or higher.

In the optical disc of the present invention, the taper angle of the pits is an angle formed between a plane that is tangential to a tapered surface at a height position of a half or nearly half the depth of the pit and a bottom surface of the pit.

In the optical disc of the present invention, the track pitch is in a range from 0.280 to 0.325 $\mu$m.

BRIEF DESCRIPTION OF THE DRAWINGS

Fig. 1 is a view schematically showing an array of pits on an optical disc used for evaluation of crosstalk between adjacent tracks in a prior art;

Fig. 2 is a block diagram showing an arrangement of a photo-detecting device in a pick-up;

Fig. 3 is a graph showing variance in a normal phase difference tracking error detection signal;

Figs. 4A and 4B are graphs showing variance in a gain fluctuation of a phase difference tracking error detection signal depending on a quantity of defocus in an optical disc;

Fig. 5 is a graph showing a relation of a gain fluctuation of a phase difference tracking error detection signal versus a pit taper angle in a case where there is no error in a light transmitting layer thickness of an optical disc;

Fig. 6 is a graph showing a relation of a gain fluctuation of a phase difference tracking error detection signal versus a pit taper angle in a case where there is an error in a light transmitting layer thickness of an optical disc;

Fig. 7 is a graph showing variance in a quantity of wave front aberration corresponding to a light transmitting layer thickness when there is a disc tilt; and

Figs. 8A and 8B are views schematically showing the shape of a pit on an optical disc according one embodiment of the present invention;

Figs. 9A and 9B are diagrams respectively showing examples of waveforms of a desirable tracking error signal and a tracking signal obtained from pit trains whose taper angle is smaller than a desired value; and

Fig. 10 is a diagram showing the definition of a taper angle when the pit has a curved taper surface.

DETAILED DESCRIPTION OF THE PREFERRED EMBODIMENTS

One embodiment of the present invention will be described in the following description.

A simulation was performed with a reproduction optical system used in the present invention, wherein a reproduction wavelength was 400 to 415 nm and the NA of the objective lens was 0.75 to 0.86. In the present embodiment, the simulation was performed based on a simulation computation by the scalar diffraction theory according to "Diffraction theory of laser readout systems for optical video discs", J.O.S.A. vol. 69, No. 1, 1979.

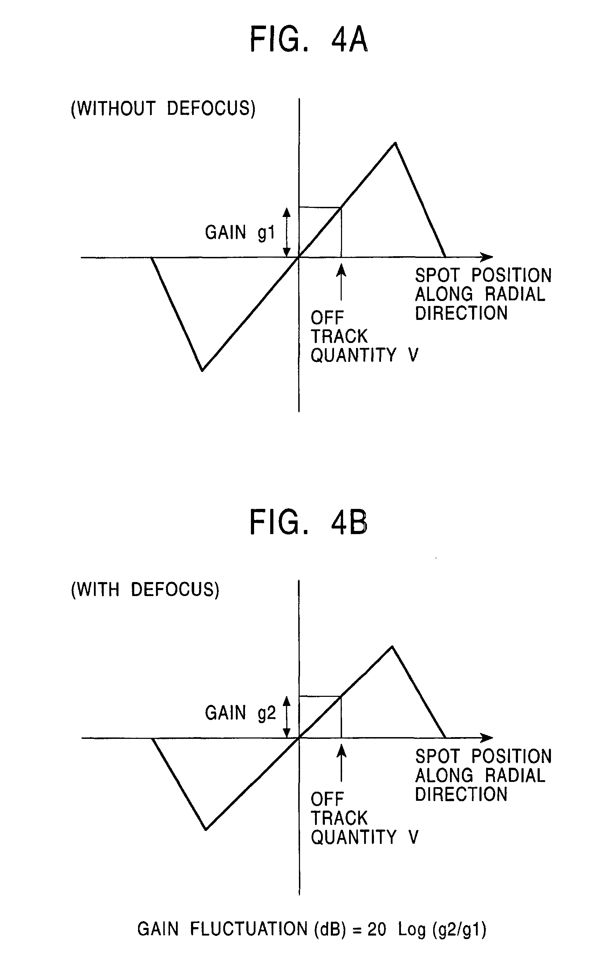

When a phase difference tracking error detection signal obtained by the arrangement shown in Fig. 2 is kept in a focused condition, a waveform as shown in Fig. 3 is shaped. However, in the case of the system described above, a reproduction wavelength is shorter and the NA of the objective lens is larger than those of an optical disc, such as a DVD, and for this reason, influences by defocus become significant. Defocus increases a gain fluctuation of the phase difference tracking error detection signal, and the waveform shown in Fig. 4A changes to the one shown in Fig. 4B.

Herein, the inventor of the present invention paid an attention to a taper angle of a pit in terms of the limit in manufacturing a high-density recordable optical disc of the next generation, and found a relation of a gain fluctuation versus a pit taper angle through a simulation. The shape of a pit, and in particular, the taper angle will be described below in detail.

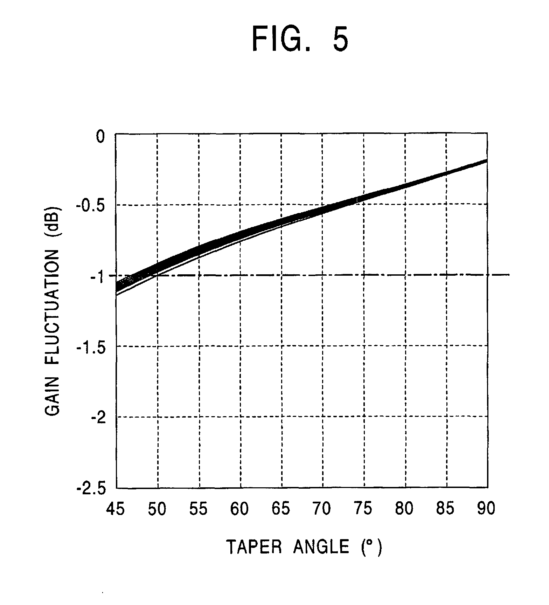

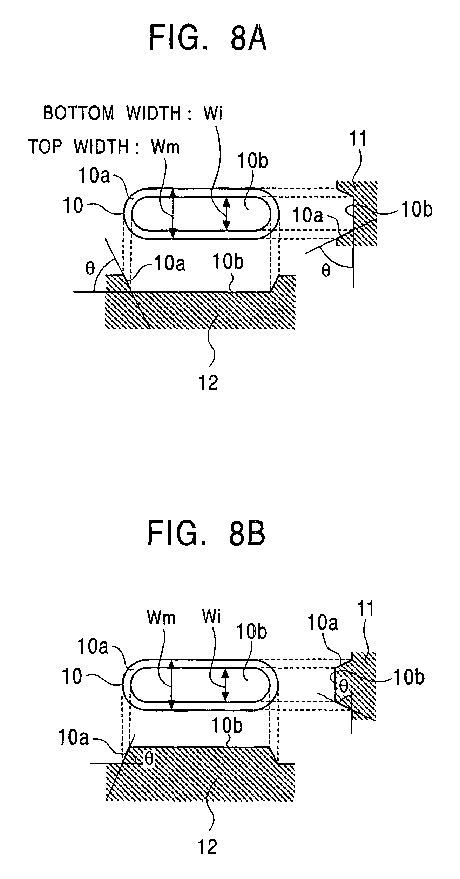

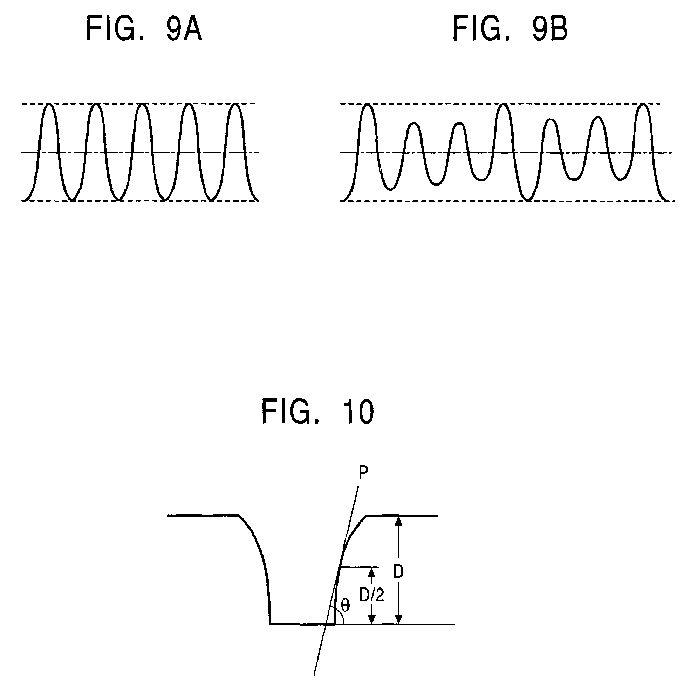

Fig. 5 shows a simulation result of a relation of a gain fluctuation versus a pit taper angle in a case where there is no error in the light transmitting layer thickness of the disc. The drawing reveals that the gain fluctuation depends on a taper angle of a pit. Herein, the gain fluctuation occurs when defocus changes up to ±0.2 μm, and wave front aberration caused by this quantity of defocus is equivalent to an optical aberration tolerance. The definition of a taper angle is, as set forth in Fig. 8A, an angle θ formed by a taper surface 10a of the pit 10 and a bottom surface 10b of the pit 10. Furthermore, it is often the case that the taper surface of a pit actually has a curved cross-section as illustrated in Fig. 10. In such a case, the taper angle can be defined as an angle θ formed between a plane P tangential to the tapered surface at a height position substantially half of the depth D of the pit and the bottom surface.

Also, in Fig. 5, several pit widths are given but width influences are hardly observed. Hence, once a taper angle of a pit is determined, it is possible to obtain a satisfactory phase difference tracking error detection signal that does not have any gain fluctuation. A quantity of gain fluctuation that does not affect reproduction is assumed to be up to -1 dB, and as is obvious from Fig. 5, a practically applicable pit taper angle is 55 degrees or higher. When the taper angle is below 55 degrees, the amplitude of the tracking error signal fluctuates, for example, as illustrated in Fig. 9B in contrast to a desirable tracking error signal depicted in Fig. 9A. This type of fluctuation of the amplitude is particularly disadvantageous for operations of the pickup which involve track-jumping.

Hence, it can be concluded that by setting the taper angle of a pit to 55 degrees or higher, it is possible to obtain a stable phase difference tracking error detection signal unaffected by defocus.

The above description described a case where there is no error in the light transmitting layer thickness, and the following description will describe a case where there is an error in the light transmitting layer thickness.

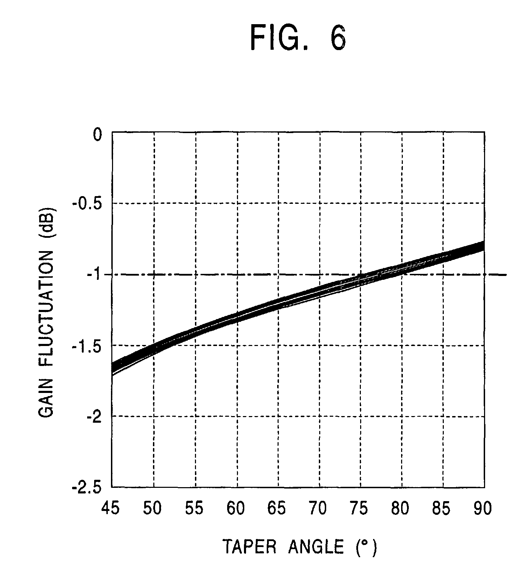

Because a reproduction wavelength is short and the NA of the objective lens is large in the system of the above described case, influences by an error in the light transmitting layer thickness are significant as with the influences by defocus. Hence, in a case where there is an error in the light transmitting layer thickness, it is assumed that a gain fluctuation caused by defocus will be greater. Thus, a simulation was performed as to a relation of a gain fluctuation versus a pit taper angle in a case where the light transmitting layer thickness of the disc had an error of ±7 μm, and the result is set forth in Fig. 6. Herein, the error in the light transmitting layer thickness is ±7 μm, and the wave front aberration is equivalent to an optical aberration tolerance.

Fig. 6 reveals that a gain fluctuation becomes greater. However, the gain fluctuation depends on a taper angle as in the case where there is no error in the light transmitting layer thickness. Several pit widths are also given in the case of Fig. 6, but influences are hardly observed, either. Consequently, it is understood that, even when there is an error in the light transmitting layer thickness, by merely setting a taper angle, it is possible to obtain a satisfactory phase difference tracking error detection signal having no gain fluctuation. Also, as is obvious from Fig. 6, by setting a taper angle of a pit to 80 degrees or higher, it is possible to obtain a more stable phase difference tracking error detection signal affected by neither defocus nor an error in the light transmitting layer thickness.

Further, besides the wave front aberration caused by defocus and an error in the light transmitting layer thickness, influences by a disc tilt have to be concerned.

The wave front aberration caused by a disc tilt is also expressed by the following equation:

$$\text{Wave front aberration} =$$

$$\text{Const} \cdot (\text{NA of objective lens})^3 \cdot (\text{Cover layer}$$

$$\text{thickness}) \cdot (\text{Disc tilt})/(\text{Reproduction wavelength})$$

The wave front aberration also becomes greater as the NA of the objective lens is larger and as the reproduction wavelength is shorter.

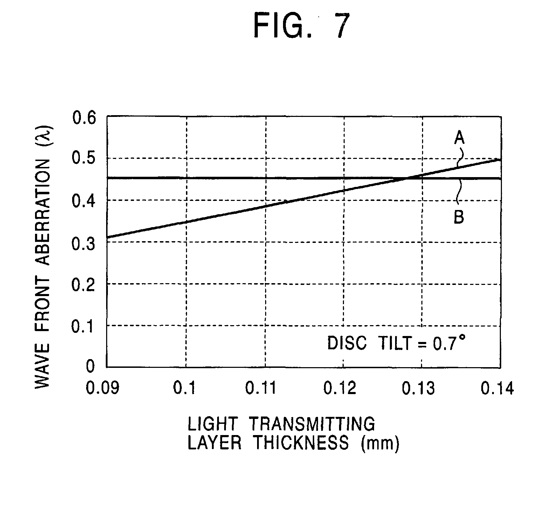

As a countermeasure, the light transmitting layer thickness is made thinner. Thus, a simulation was performed as to a relation of the light transmitting layer thickness versus a quantity of wave front aberration when disc tilt was 0.7° in the optical disc system of the present embodiment, and the result is set forth in Fig. 7. As is obvious from Fig. 7, given a consideration to the fact that the system is judged as satisfactory when a quantity of wave front aberration is suppressed to a level of the wave front aberration (straight line B) of a DVD, a light transmitting layer thickness of 0.13 mm or less is sufficient for the optical disc system of the present invention (curve A). Herein, the straight line B of a DVD is the result obtained in a case where the wavelength is 650 nm, NA is 0.60, and the light transmitting layer thickness is fixed to 0.6 mm.

The above description described a case where a pit (concave pit) is formed at the back of a land as viewed from the reproduction optical system as shown in Fig. 8A. It should be appreciated, however, that the present invention is applicable in a case where a pit (convex pit) is formed at the front of the land as shown in Fig. 8B. Also in this case, the taper angle is an angle formed by a taper surface 10a of the pit 10 and a bottom surface 10b of the pit 10.

The above description described the phase difference tracking error detection signal obtained by the arrangement shown in Fig. 2. It should be also appreciated, however, that the present invention is not limited to the foregoing arrangement, and can be applied to tracking error detection signals of other methods found by using a phase difference among signals obtained by a multi-split detector.

As has been discussed, by setting a taper angle of a pit recorded in a disc to 55 degrees or higher, it is possible to obtain a stable phase difference tracking error detection signal unaffected by defocus even in a large-capacity reproduce-only optical disc system using a blue light source and an objective lens having a large NA. Also, by setting a taper angle of a pit to 80 degrees or higher, it is possible to obtain a stable phase difference tracking error detection signal affected by neither defocus nor an error in the light transmitting layer thickness.

In the case of recording the pits, a resist is applied on a master disc at the mastering of an optical disc by an electron beam recorder, for example, and the master disc is exposed as an electron beam is irradiated while the master disc is rotated, after which the resist is developed. As a result, concave portions corresponding to pits are formed at exposed portions. In the process of forming the concave portions, that is the pits, it is possible to realize a desired taper angle by adjusting parameters such as the thickness of the resist layer, the exposure time of the electron beam, and the like.

As has been discussed, the optical disc of the present invention can suppress a gain fluctuation of a phase difference tracking error detection signal by setting a taper angle of a pit recorded in the disc to 55 degrees or higher, thereby making it possible to increase an information recording density drastically compared with a DVD.

## Claims

1. An optical disc comprising an information recording layer where information is recorded as an array of pits at a predetermined track pitch, and a light transmitting layer formed on said information recording layer and having a film thickness of 0. 13 mm or less, the information recorded therein being reproduced upon irradiation of a beam of light having a wavelength ranging from 400 nm to 415 nm onto said information recording layer through said light transmitting layer from an objective lens having a numerical aperture ranging from 0.75 to 0.86, wherein a taper angle of said pits is 55 degrees or higher, said taper angle being an angle formed by a tapered surface of said pit and a bottom surface of said pit.

2. The optical disc according to claim 1, wherein the taper angle of said pits is 80 degrees or higher.

3. The optical disc according to claim 1 or 2, wherein the taper angle of said pits is an angle formed between a plane tangential to a tapered surface at a height position substantially half of a depth of said pits and a bottom surface of said pits.

4. The optical disc according to any one of claims 1 to 3, wherein said track pitch is in a range from 0.280 to 0.325 μm.

# FIG. 1

TRACK PITCH

CENTER OF TRACK

CENTER OF TRACK

LIGHT SPOT

CENTER OF TRACK

Wm   Wi   PIT

# FIG. 2

# FIG. 3

Tp : TRACK PITCH

# FIG. 4A

(WITHOUT DEFOCUS)

GAIN g1

SPOT POSITION
ALONG RADIAL
DIRECTION

OFF
TRACK
QUANTITY V

# FIG. 4B

(WITH DEFOCUS)

GAIN g2

SPOT POSITION
ALONG RADIAL
DIRECTION

OFF
TRACK
QUANTITY V

GAIN FLUCTUATION (dB) = 20 Log (g2/g1)

## FIG. 5

# FIG. 6

# FIG. 7

# FIG. 8A

# FIG. 8B

FIG. 9A

FIG. 9B

FIG. 10